# EUROPÄISCHE PATENTSCHRIFT

(11) **EP 2 206 770 B1**
(45) Veröffentlichungstag und Bekanntmachung des Hinweises auf die Patenterteilung: **26.02.2020**
(21) Anmeldenummer: 09016092.0
(22) Anmeldetag: 29.12.2009
(51) Int. Cl.: C12C 3/08, C12C 3/12, C12C 13/00

(54) **Verfahren und Vorrichtung zur Bierbereitung**
Method and device for preparing beer
Procédé et dispositif de préparation de bière

(30) Priorität: 29.12.2008 DE 102008063304
(43) Veröffentlichungstag der Anmeldung: 14.07.2010
(73) Patentinhaber: BeVa Besitz- und Verwaltungs-GmbH & Co.KG, 83370 Seeon (DE)
(72) Erfinder: Hertel, Marcus, deceased (AT)
(74) Vertreter: Kador & Partner PartG mbB

(56) Entgegenhaltungen:
- WO-A1-2009/083205
- DE-C- 566 217
- FR-A- 834 262
- GB-A- 1 424 786
- US-A- 1 119 512
- RIEMANN J: "SEPARATE HOPFENKOCHUNG UND BITTERSTOFFAUSBEUTE", BRAU, NUERNBERG, DE, Bd. 115, Nr. 30, 24. Juli 1975 (1975-07-24), Seiten 994-998, XP008122981, ISSN: 0724-696X

## Beschreibung

Die Erfindung betrifft ein Verfahren zur Bierbereitung, wobei aus einer Maische eine Würze gewonnen, die Würze anschließend einer Temperaturbehandlung unterzogen, aus der behandelten Würze der Heißtrub abgeschieden und nach der Heißtrubabscheidung aus der Würze durch eine Gärung Bier gewonnen wird. Die Erfindung beschäftigt sich damit, wie die Ausbeute aus Insbesondere vorisomerisierten Hopfenprodukten im Zuge eines Bierbereitungsprozesses gesteigert werden kann. Die Erfindung betrifft darüber hinaus eine zur Durchführung des Verfahrens geeignete Vorrichtung.

Zur Erhöhung der Bitterstoffausbeute wurden in den letzten Jahren diverse Hopfenprodukte entwickelt, bei welchen die Bitterstoffe bereits isomerisiert vorliegen. Dies hat den immensen Vorteil, dass sich die Polarität der Bitterstoffe nach einer Isomerisierung stark erhöht. Während nahezu alle gelösten unisomerisierten Bitterstoffe im Zuge der Gärung aufgrund der geringeren Temperaturen und des pH-Sturzes zwangläufig wieder ausgeschieden werden - die maximale Löslichkeit dieser Stoffe fällt bei Gärbedingungen auf unter 1 bis 2 mg/l (Mischungslücke) -, können isomerisierte Bitterstoffe auch bei diesen Bedingungen aufgrund ihrer gestiegenen Polarität mit einer Konzentration von bis zu 2000 mg/l in Lösung bleiben. Hier kann es folglich nur zu geringeren Verlusten durch Adsorption an Hefen und anderen Feststoffen kommen. Ein Ausfällen durch Überschreiten der maximalen Löslichkeit in Würze bzw. Wasser erfolgt nicht. Hierdurch ist die Bitterstoffausbeute bei Verwendung solcher vorisomerisierter Hopfenprodukte deutlich größer (in der Regel zwischen 40 und 50 %) als bei Verwendung herkömmlicher Hopfenprodukte, bel welchen die Bitterstoffe nicht chemisch vorisomerisiert wurden und somit noch in ihrer ursprünglichen, unisomerisierten Form vorliegen.

Die Erfindung befasst sich insbesondere damit, wie die Bitterstoffausbeute bei Verwendung vorisomerisierter Hopfenprodukte gesteigert werden kann. Prinzipiell kann durch das erfindungsgemäße Verfahren aber auch die Bitterstoffausbeute bei Verwendung herkömmlicher Hopfenprodukte erhöht werden, wenn zusätzlich auf eine dauerhafte Löslichkeft der Bitterstoffe bis hin zum fertigen Bier geachtet wird. So werden von der Erfindung prinzipiell auch nicht vorisomerisierte Hopfenprodukte mit umfasst. Bei Verwendung solcher Produkte sollte das erfindungsgemäße Verfahren aber zwingend vor einer Temperaturbehandlung der Würze erfolgen, damit noch eine ausreichende Isomerisierung der extrahierten Bitterstoffe erfolgen kann und somit die extrahierten Bitterstoffe auch nach der Würzekühlung und dem pH-Sturz zu großen Teilen gelöst bleiben können. Alternativ kann das erfindungsgemäße Verfahren bei Verwendung von Hopfenprodukten, bei welchen die Bitterstoffe noch nicht vorisomerislert sind, auch mittels alkoholhaltiger Würze, also bspw. nach der Hauptgärung, vollzogen werden. Durch den Alkoholgehalt ändern sich nämlich die thermodynamischen Eigenschaften der Mischung (Würze) und es können auch unisomerisierte Bitterstoffe in hohen Konzentrationen in der Würze in Lösung bleiben. Hierdurch können auch Biere erzeugt werden, welche einen deutlich höheren Gehalt an unisomerisierten Bitterstoffen enthalten als dies bei herkömmlichen Brauverfahren möglich Ist, wodurch auch vollkommen neue Geschmacks- bzw. Bittereindrücke bei den resultierenden Bieren geschaffen werden können. Da durch das erfindungsgemäße Verfahren bei Verwendung von vorisomerisierten Produkten aufgrund der gestiegenen Polarität der eingesetzter Bitterstoffe aber ein deutlich höherer Anstieg der Bitterstoffausbeute erzielt werden kann, bezieht sich die Erfindung insbesondere auf diese Produkte, weswegen im Folgenden auch nur auf diese Hopfenprodukte eingegangen wird. Das Beschriebene kann jedoch sinngemäß auch auf den Einsatz herkömmlicher Hopfenprodukte übertragen werden.

Der Ausnutzungsgrad des Hopfens im Zuge der Bierbereitung ist mit ca. 40- 50 % auch bei der Verwendung vorisomerisierter Hopfenprodukte bis heute noch sehr gering. Durch eine gezielte Steigerung der Einbringung der isomerisierten Bitterstoffe in die Würze könnte der Einsatz an vorisomerislerten Hopfenprodukten, bei gleichbleibender Zusammensetzung des resultierenden Bieres, reduziert werden. Somit könnten Rohstoffkosten gespart und ein geringerer Verkaufspreis erzielt werden, ohne den Charakter eines Bieres zu verändern und die Qualität zu vermindern.

In der Regel werden vorisomerisierte Hopfenprodukte in verschiedenen Formen während der Würzekochung, beispielsweise durch einfache Zugabe oder durch Dosiervorrichtungen in die Würze eingebracht. Wurden früher zur Auslaugung der Bitterstoffe aus Rohhopfen verschiedene Verfahren und Apparaturen, wie beispielsweise die Vermahlung des Rohhopfens, Ultraschallbehandlungen des Rohhopfens vor oder auch nach einer Zugabe in die Würzepfanne, sogenannte Hopfen-Extraktionsapparate (welche durch ein separates mehrstündiges Kochen mehr Stoffe des Hopfens nutzbar machen sollten, die Bitterstoffe - und hier insbesondere die Iso-α-Säuren - aufgrund des langen Kochens jedoch zu großen Teilen zerstört bzw. umgewandelt haben) oder Hopfenentlauger (hierbei wird der Hopfen durch mechanische Einwirkungen in einem Umpumpverfahren zerrissen), eingesetzt, sollte dies durch die Einführung von Hopfenprodukten, und hier insbesondere von vorisomerisierten Hopfenprodukten, überflüssig werden, da diesbezügliche Maßnahmen bereits beim Hopfenveredler (bzw. der Hopfen verarbeitenden Industrie) durchgeführt werden. Gerade bei Verwendung von Extrakten wird angenommen, dass hier keine weitere Extraktion der Iso-α-Säuren mehr vollzogen werden muss, da die Harze des Hopfens von den Feststoffen des Hopfens bereits beim Hopfenveredler extrahiert wurden. Fälschlicherweise geht man davon aus, dass hier alle Bitterstoffe durch eine einfache Extraktzugabe zur Würze in der Würzepfanne (Pfannen-Würze) in selbiger gelöst werden können. Auch beim Einsatz von Pellets, bei welchen die Hopfenmatrix durch eine mechanische Behandlung beim Hopfenveredler bereits stark zerkleinert vorliegt, geht man davon aus, dass hierdurch bereits bei einer einfache Zugabe zur Pfannen-Würze eine maximal mögliche Extraktion erzielt werden kann. Insofern geht man bis heute davon aus, dass bei Verwendung von Hopfenprodukten keine weiteren Maßnahmen zur Extraktion der Bitterstoffe mehr unternommen werden müssen, da diese bereits beim Hopfenveredler vollzogen wurden. Bei Verwendung vorisomerisierter Hopfenprodukte wird diese Annahme noch dadurch unterstützt, dass isomerisierte Bitterstoffe aufgrund ihrer gestiegenen Polarität schneller in Wasser bzw. Würze gelöst werden können. Insofern werden bis heute keine Maßnahmen für eine weiterführende Extraktion der Bitterstoffe bei Verwendung von Hopfenprodukten - und hier insbesondere beim Einsatz vorisomerisierter Hopfenprodukte - vollzogen. Vorisomerisierte Hopfenprodukte, welche dem Brauprozess zugegeben und nicht als Down-Stream-Produkte eingesetzt werden, sind hierbei vor allem in Form von Hopfenpellets sowie Extrakten bekannt.

Die Hopfenprodukte werden im Zuge der Bierbereitung direkt der Pfannen-Würze vor, während oder teilweise auch nach deren Temperaturbehandlung zugegeben, Zwar werden Hopfenprodukte nach dem heutigen Stand der Technik teilweise vorgelöst und/oder die Hopfenprodukte werden mittels Dosiervorrichtungen, welche mit der Sudpfanne verbunden sind und mit Würze durchspült werden, in die Würze eingebracht, jedoch wird das Hopfenprodukt immer direkt in die Sudpfanne und somit zur gesamten Würze gegeben, wodurch einer Extraktion der Bitterstoffe in die Würze auch bei Verwendung vorisomerisierter Hopfenprodukte immer noch starke Grenzen gesetzt sind.

Die nachveröffentlichte WO 2009/083205 A1 zeigt und beschreibt ein Verfahren und eine Vorrichtung zur Bierbereitung, wobei ein Würzeteilstrom aus einer Würzeleitung vor der Würzepfanne aus dem Würzehauptstrom abgezweigt und einem Heizbehälter zugeführt wird. Ist eine bestimmte Menge Würzeteilstrom in diesen Heizbehälter hineingeströmt, so wird der Zufluss des Würzeteilstroms unterbrochen und der im Heizbehälter befindliche Vorrat wird zusammen mit einer bestimmten Menge eines in den Heizbehälter eingeführten Hopfenprodukts erhitzt. Nach einer vorbestimmten Heizzeit wird die Mischung durch eine nachgeschaltete Diffusionsbatterie, in welcher nicht gelöste Bestandteile des Hopfenprodukts zurückgehalten werden, dem von einem Heißtrubabscheider, der der Würzepfanne nachgeschaltet ist, zu einem Würzekühler fließenden Würzehauptstrom wieder zugemischt.

Die GB 1 424 786 A beschreibt einen isomerisierten Hopfenextrakt, der am Ende der Würzekochung der Würze beigegeben wird .

Aus der DE 566 217 A ist ein Verfahren zum Kochen und zum Verdampfen von Flüssigkeiten, insbesondere von Maischen und Bierwürzen, bekannt, bei welchem ein Teil der heißen Würze aus dem Würzekocher entnommen und in einem Hopfenentlauger über Hopfen geführt und dann in die Würzepfanne zurückgeführt wird. Hier wird also ein Umlaufbetrieb der Würze aus dem Würzekocher zurück in den Würzekocher gefahren.

Die FR 834 262 A beschreibt ein Verfahren und eine Vorrichtung, für die Vorbereitung von Würze für einen Brauprozess, wobei ein Aufnahmebehälter für die Würze mit einem Ablauf und einem Zulauf versehen ist und wobei der Ablauf über eine Pumpe mit einem Plattenwärmetauscher zum Erhitzen der Würze verbunden ist und ein Ablauf des Plattenwärmetauschers mit dem Zulauf des Braugefäßes verbunden ist. Auf diese Weise wird die Würze im Kreislauf durch den Plattenwärmetauscher gefahren und dabei erhitzt. Die Hopfengabe erfolgt in den Braubehälter. Es kann aber auch ein separater Hopfenextraktor im Bereich des Plattenwärmetauschers vorgesehen sein, durch den aus dem Plattenwärmetauscher abgeführte Würze hindurchgeführt und wieder in den Plattenwärmetauscher zurückgegeben wird. Durch den Umlaufbetrieb ist jedoch nicht gewährleistet, dass dem Hopfenextraktor stets frische Würze zugeführt wird, die vorher noch nicht durch den Hopfenextraktor gelaufen ist.

Aufgabe der Erfindung ist es, ein Verfahren und eine Vorrichtung zur Bierbereitung wie eingangs genannt anzugeben, womit sich die Ausbeute der Bitterstoffe auch bei Verwendung von vorisomerisierten Hopfenprodukten bei der Bierbereitung noch weiter erhöhen lässt.

Die auf ein Verfahren gerichtete Aufgabe wird dabei für ein Verfahren gemäß Anspruch 1 erfindungsgemäß dadurch gelöst, dass aus einer Maische eine Würze gewonnen, die Würze anschließend einer Temperaturbehandlung unterzogen, aus der behandelten Würze der Heißtrub abgeschieden, und nach der Heißtrubabscheidung aus der Würze durch eine Gärung Bier gewonnen wird, dadurch gekennzeichnet, dass während des Brauprozesses ein insbesondere vorisomerisiertes Hopfenprodukt nicht auf einmal der gesamten Würze zugegeben wird, sondern die Bitterstoffe aus dem Hopfenprodukt mittels Würze als Extraktionsmittel in einem Extraktionsbehälter (15), der als Schneckenexraktor aufgebaut ist, gezielt extrahiert und hierdurch in die Würze überführt werden, wobei zumindest teilweise auch eine Gegenstromführung von Würze und Hopfenprodukt realisiert wird. Somit können während des Brauprozesses die Bitterstoffe aus dem verwendeten vorisomerisierten Hopfenprodukt nach verfahrenstechnischen Gesichtspunkten gezielt mit Würze als Extraktionsmittel extrahiert und somit in die Würze überführt werden.

Unter dem Begriff Würze sollen dabei alle Flüssigkeiten während des Brauprozesses zwischen der Maischebereitung und der Gärung inklusive der Nachgärung bzw. Lagerung verstanden werden. So werden unter Würze insbesondere auch das zur Würzebereitung benötigte Vorprodukt Wasser, aber auch die zur Würzeherstellung ebenfalls teilweise eingesetzten Fluide wie bspw. Laugen, verstanden, da aus diesen eine Würze resultiert. Darüber hinaus werden auch Folgebezeichnungen wie beispielsweise Jungbier und dergleichen von dem hier verwendeten Begriff umfasst. Die Verwendung von Wasser bietet sich hier insbesondere bei der "High-Gravity"-Blerbereitung an. So können hier vorteilhafterweise die Bitterstoffe dem Bier zumindest teilweise mit dem für die Verdünnung bzw. Stammwürzeeinstellung verwendeten Wasser zugefügt werden. Hierzu wird mit diesem Wasser vor der Rückverdünnung die erfindungsgemäße gezielte Extraktion der isomerisierten Bitterstoffe aus einem vorisomerisierten Hopfenprodukt durchgeführt.

Unter gezielt wird hierbei verstanden, dass ein Hopfenprodukt nicht auf einmal in die gesamte Würze eingebracht bzw. mit der gesamten Würze in Kontakt gebracht wird, sodass sich die Bitterstoffkonzentration in der Würze zwangsläufig stetig erhöht und eine Extraktion der Bitterstoffe aus dem Hopfenprodukt somit verlangsamt und verschlechtert wird. Anders ausgedrückt wird unter gezielt verstanden, dass das zur Extraktion notwendige Konzentrationsgefälle zwischen den zu extrahierenden Bitterstoffen im Hopfenprodukt und im zugeführten Extraktionsmittel Würze größer gehalten wird als dies bei herkömmlichen Brauverfahren bzw. bei direkter Zugabe des Hopfenproduktes zur gesamten Würze der Fall ist. Eine Vermischung von Würze, welche bereits zur Extraktion verwendet wurde, mit frischer Würze, welche noch zur Extraktion verwendet werden soll, wird - soweit dies möglich ist - gezielt vermieden. Unter Berücksichtigung der später beschriebenen Gesetze der Extraktion wird somit die Einbringung von Bitterstoffen in die Würze gezielt gesteigert, woraus eine deutlich höhere Ausnutzung hervorgerufen wird.

Die wichtigsten Inhaltsstoffe vorisomerisierter Hopfenprodukte, die für die spätere Bitterkeit der Biere sorgen, sind die Iso-α-Säuren. Zwar stellen per Definition die Gesamtharze des Hopfens die Summe aller Bitterstoffe dar, und es spielen bei der Bitterkeit auch andere Hopfeninhaltsstoffe, wie beispielsweise β-Säuren, eine geringe Rolle, jedoch ist dieser Anteil vemachlässigbar gering, weswegen im Folgenden exemplarisch nur auf die Iso-α-Säuren als Bitterstoffe eingegangen wird. Die beschriebenen Mechanismen und Vorteile sind jedoch auch auf die weiteren Bitterstoffe des Hopfens übertragbar.

Die Erfindung erkennt, dass sich die immer noch geringe Ausbeute an Hopfenbitterstoffen bel Verwendung vorisomerisierter Hopfenprodukte vor allem dadurch erklären lässt, dass ein Großteil der Iso-α-Säuren bei herkömmlicher Prozessführung auch hier nicht in Lösung gehen kann, beziehungsweise nicht ausreichend aus dem Hopfenprodukt extrahiert wird.

Zur Lösung dieses Problems geht die Erfindung nun von den folgenden Überlegungen aus:
Die Bitterstoffe müssen trotz der Verwendung von vorisomerisierten Hopfenprodukten - und den damit einhergehenden Vorteilen im Vergleich zur Verwendung von Naturhopfen oder anderen Hopfenprodukten - erst in die Würze extrahiert werden. Dieser Vorgang entspricht einer Fest-Flüssig-Extraktion und unterliegt somit auch deren Gesetzmäßigkeiten. Dies kann aufgrund ihrer hohen Viskosität mit guter Näherung auch bei Verwendung von Hopfenextrakten so gesehen werden, weswegen im Folgenden auch hier von einer Fest-Flüssig-Extraktion gesprochen wird. Im allgemeinen muss zwar das primäre Ziel bei einer Verwendung von Extrakten eine starke Emulgierung und Lösung (hier in der Würze) sein, allerdings bestehen die im Braubereich verwendeten (vorisomerisierten) Extrakte meist zu über 50 % aus anderen Stoffen, vorrangig β-Säuren, sodass auch hier die Iso-α-Säuren erst aus der Extraktmatrix in die Würze extrahiert werden müssen, was ebenfalls durch die gesetzte der Fest-Flüssig-Extraktion beschrieben werden kann. Unterstützt wird dies durch die Tatsache, dass β-Säuren nahezu keine Löslichkeit In Würze aufweisen, sodass es nicht möglich ist, den gesamten Extrakt, gerade bei reduzierten Temperaturen, in Lösung zu bringen bzw. zu halten. Analog zur Zerkleinerung bei festen Hopfenprodukten, welche der Erzielung einer großen Oberfläche dient (s.u.), muss hier darauf geachtet werden, die Emulgierung so zu steuern, dass der Extrakt in der Würze in möglichst kleinen Tropfen vorliegt, um auch hier die für eine effiziente Extraktion benötigte große (Austausch-)Oberfläche zu schaffen.

Mit dem 1.FiCKschen Gesetz können die entscheidenden Parameter benannt werden, welche die Vorgänge der Fest-Flüssig-Extraktion bestimmen, bzw. evtl. beschleunigen. So nimmt die pro Zeiteinheit ausgetauschte Stoffmenge - in diesem Fall sind hierunter die gewünschten Bitterstoffe zu verstehen - zu, wenn jeweils der Diffusionskoeffizient, die Fläche des Diffusionsweges und das örtliche Konzentrationsgefälle wachsen. Der Diffusionskoeffizient ist hierbei proportional zur Temperatur und indirekt proportional der dynamischen Zähigkeit und dem hydrodynamischen Radius eines kugelförmigen Teilchens. Die Extraktionszeit vom Eindringen des Extraktionsmittels (hier beispielsweise der Würze) in ein Feststoffkorn (hier das Hopfenprodukt) bis zum Konzentrationsausgleich hängt maßgeblich von der Kappilar- oder Weglänge ab, die das Lösungs- oder Extraktionsmittel im Feststoff, bei herkömmlichen Brauprozessen also die Pfannen-Würze im Hopfenprodukt, zurücklegen muss. Damit wird deutlich, dass eine schnelle und vollständige Extraktion der Bitterstoffe nur zu erreichen ist, wenn dem Extraktionsmittel große Austauschflächen mit dem und kurze Kapillarwege in dem Hopfenprodukt angeboten werden. Darüber hinaus ist es für eine gute und schnelle Extraktion von Vorteil, wenn immer wieder "frisches", also keine oder nahezu keine Bitterstoffe enthaltendes Extraktionsmittel (hier Würze) mit dem Hopfenprodukt in Kontakt kommt, um das Konzentrationsgefälle und somit die Extraktion aus dem Hopfenprodukt auf ein Maximum zu erhöhen. Dies ist bei konventioneller Hopfengabe aufgrund der - unter Umständen auch ungleichmäßigen und langsamen - Vertellung der Bitterstoffe in der Würze nicht realisierbar. Bei einer direkten Zugabe elnes Hopfenproduktes in die gesamte Würze kommt es zwangsläufig immer dazu, dass sich ein Gleichgewicht zwischen den Bitterstoffen Im Hopfenprodukt und den in der Würze gelösten einstellt. Gleiches gilt auch bei Verwendung gängiger Dosiervorrichtungen. Nach Erreichen dieses Gleichgewichtszustandes gibt es kein treibendes Konzentrationsgefälle mehr, so dass keine weiteren Bitterstoffe aus dem Hopfenprodukt in die Würze übergehen. Eine vollständige Extraktion der Bitterstoffe aus einem Hopfenprodukt ist somit bei einer direkten Zugabe eines Hopfenproduktes in die gesamte Würze nicht möglich. Aufgrund der Verringerung des Konzentrationsgefälles läuft eine Extraktion bei herkömmlichen Brauverfahren darüber hinaus immer bedeutend langsamer ab, sodass bei den gängigen Würzekochzeiten in der Regel nicht einmal der beschriebene Gleichgewichtszustand erreicht werden kann.

Es ist folglich ersichtlich, dass eine Hopfengabe zur gesamten Würze, wie sie heutzutage durchgeführt wird, auch bei Verwendung von vorisomerisierten Hopfenprodukten nur zu einer unzureichenden Extraktion der Bitterstoffe in die Würze führen kann, woraus der auch hier noch existente mangelnde Ausnutzungsgrad resultiert. In der Praxis Ist dies an dem hohen Gehalt an isomerisierten Bitterstoffen, welchen die Hopfenrückstände bei konventioneller Hopfengabe noch enthalten, ersichtlich. Dies ist auch bei Verwendung gängiger Hopfengabebehälter, welche von der Würze im Kreislauf durchspült werden, der Fall, da sich die isomerisierten Bitterstoffe während des Vorgangs bereits in der gesamten Würze lösen und somit das zur Extraktion benötigte Konzentrationsgefälle zwangsläufig minimieren. Es stellt sich bei ausreichender Dauer auch hier ein Gleichgewichtszustand ein, ab welchem keine Extraktion der isomerisierten Bitterstoffe aus dem Hopfenprodukt mehr erfolgt.

Zur Erhöhung der Hopfenausbeute wird nun Würze als Extraktionsmittel zusammen mit einem Hopfenprodukt In eine separate Vorrichtung geführt, welche der Lösung und vor allem der Extraktion der isomerisierten Bitterstoffe aus dem Hopfenprodukt dient. Insbesondere wird hierbei vermieden, dass Würze, mit welcher bereits Bitterstoffe extrahiert wurden, mit frischer - also noch keine oder nahezu keine Bitterstoffe enthaltenden - Würze, welche noch zur Extraktion herangezogen werden soll, vermischt wird. Durch diese Prozessführung wird erreicht, dass nahezu alle Bitterstoffe in die Würze eingebracht werden können.

Diese Zugabe der extrahierten Bitterstoffe zur restlichen Würze - und auch die Extraktion selbst - kann prinzipiell an jeder Stelle im Brauprozess - und hier auch während oder nach der Gärung - erfolgen. Insbesondere kann hierbei vorteilhafterweise nicht nur eine Teilstrom der Würze, sondern auch die gesamte Würze eines Sudes als Extraktionsmittel verwendet werden. Da bei der erfindungsgemäßen Extraktion der Bitterstoffe mit Würze das Extraktionsmittel nicht mehr vom extrahierten Stoff abgetrennt werden muss, sondern bei diesem verbleiben soll, ergeben sich hierdurch keine (energetischen) Nachteile. Im Gegenteil, denn durch die Verwendung der gesamten zur Verfügung stehenden überproportional großen Menge an Extraktionsmittel, kann der Nachteil ausgeglichen werden, der sich aufgrund der großen Nichtidealität (Mischungslücke) bei der Verwendung von wässrigen Fluiden als Extraktionsmittel für die wenig polaren Bitterstoffe ergibt.

Um die gesamte Menge an eingebrachten Hopfenprodukten in Kontakt zum Extraktionsmittel zu bringen, empfiehlt es sich, dieses mit dem Hopfenprodukt homogen zu vermischen. Eine Homogenisierung der Mischung kann beispielsweise durch ein Umpumpen oder Rühren erfolgen. Auch können zur Homogenisierung Ultraschall oder Vibrationen eingebracht werden. Darüber hinaus kann eine Homogenisierung durch ein Ein- bzw. Durchleiten von Gasen oder Dämpfen hervorgerufen werden.

Darüber hinaus Ist es bei der Durchführung der erfindungsgemäßen Extraktion vor einer Temperaturbehandlung der Würze ratsam, anstelle der Hauptgüsse oder der bereits homogenisierten Würze, nur die Nachgüsse, welche dem letzten Auslaugen der Spelzen dienen, als Extraktionsmittel zu verwenden, da diese deutlich weniger Extrakt besitzt. Demzufolge kann auch weniger Extrakt im Hopfenprodukt zurückgehalten werden und verloren gehen.

Hierzu wird insbesondere im Anschluss an die Fest-Flüssig-Trennung (Läutern) beziehungsweise vor der Würzekochung ein Strom der Würze nicht direkt sondern über einen separaten Extraktionsbehälter, in welchem sich das Hopfenprodukt befindet, In die Würzepfanne geführt, wodurch eine gezielte Extraktion ermöglicht wird. Hierdurch wird erreicht, dass nahezu alle Bitterstoffe aus dem Hopfenprodukt extrahiert und in gelöster Form in die Würzepfanne geführt werden.

In einer vorteilhaften Ausführung empfiehlt es sich, die Extraktion erst im Anschluss an die Heißtrubabscheidung, hier insbesondere vor der Würzekühlung, durchzuführen. Da bei Verwendung vorisomerisierter Hopfenprodukte keine Isomerisierung (während der Temperaturbehandlung der Würze) mehr vollzogen werden muss, ist eine gezielte Extraktion auch an dieser Stelle im Brauprozess möglich, ohne hierbei Verluste durch ein Überschreiten der Mischungslücke während der Gärung hinnehmen zu müssen. Durch eine Extraktion nach der Heißtrubabscheidung kann es vermieden werden, dass gelöste Bitterstoffe adsorptiv an den Trub gebunden und somit wieder aus der Würze entfernt werden können.

Prinzipiell ist eine gezielte Extraktion und/oder Rückführung aber auch erst im Kaltbereich, hier insbesondere nach dem Anstellen beziehungsweise nach der Hauptgärung möglich, wodurch auch Adsorptionsverluste der isomerisierten Bitterstoffe an Hefen minimiert werden können.

Die erfindungsgemäße gezielte Extraktion kann diskontinuierlich oder kontinuierlich durchgeführt werden. Darüber hinaus ist es auch möglich, mehrere Extraktionsapparate hintereinanderzuschalten. Als mögliche Verfahrensvarianten der Fest-Flüssig-Extraktion können hierbei beispielsweise das Verdrängungs- sowie das Eintauchverfahren zum Einsatz kommen. Beim Verdrängungsverfahren wird das Extraktionsgut, also hier das isomerisierte Hopfenprodukt, mit frischem Extraktionsmittel (hier also Würze) beaufschlagt, worauf das Extraktionsmittel mit dem Hopfenprodukt zur Extraktion gut durchmischt wird. Hierfür können beispielsweise Rührer zum Einsatz kommen. Im Anschluss daran setzt sich der Extraktionsrückstand, also das an Bitterstoffen verarmte Hopfenprodukt, ab und wird somit nicht in die restliche Würze eingebracht, und das Bitterstoffe enthaltende Fluid wird abgezogen. Dieser Vorgang kann mehrmals mit frischer Würze als Extraktionsmittel wiederholt werden, bis eine gewünschte Extraktion der Bitterstoffe aus dem Hopfenprodukt erreicht ist.

Beim Eintauchverfahren hingegen wird das Hopfenprodukt durch das Extraktionsmittel geführt. Bei allen Verfahrensvarianten ergibt sich bei Verwendung von Würze als Extraktionsmittel der grundlegende Unterschied zu einer gängigen Fest-Flüssig-Extraktion, dass das Extraktionsmittel vom extrahierten Stoff nicht mehr getrennt werden muss.

Eine Fest-Flüssig-Extraktion kann in verschiedenen Extraktionsbehältern mit unterschiedlichen Ausführungsformen erfolgen. Wegen der sie entscheidend bestimmenden Diffusionsvorgänge werden sie auch als Diffusionsbatterien bezeichnet. Wie dargestellt können deren entscheidende Parameter nach dem 1. FICKschen Gesetz beschrieben werden.

Die zur Extraktion verwendete Würze sollte aufgrund der Erhöhung des Diffusionskoeffizienten hierbei eine möglichst geringe dynamische Zähigkeit sowie gegebenenfalls eine erhöhte Temperatur aufweisen, um die Extraktion zu beschleunigen. Aufgrund der guten Lösungseigenschaften ist die Verwendung alkoholhaltiger Würze, gerade bei einer Extraktion bei niedrigen Temperaturen wie sie nach der Würzekühlung vorliegen, vorteilhaft.

Darüber hinaus ist es möglich, für einen Extraktionsprozess auch zusätzlich die isomerisierten Hopfenproduktreste eines anderen Brauprozesses zu verwenden, gerade wenn sie noch größere Mengen an Bitterstoffen beinhalten. Hierdurch können Verluste an Bitterstoffen, welche in den Hopfenproduktresten verblieben sind, vermieden werden.

Der Extraktionsprozess kann beispielsweise in einer einstufigen, diskontinuierlich arbeitenden Diffusionsbatterie erfolgen. Hierbei wird der Extraktionsbehälter mit dem vorisomerisierten Hopfenprodukt und mit dem Extraktionsmittel (Würze) befüllt. Das Hopfenprodukt liegt hier beispielsweise auf einem Siebboden. Das Gemisch wird daraufhin unter Rühren bewegt, wobei der Feststoff ausgelaugt wird. Danach wird das Extraktionsmittel mittels Pumpen über den Siebboden abgezogen. Alternativ kann die Fest-Flüssig-Trennung hier beispielsweise auch durch eine rein durch die Schwerkraft hervorgerufene Sedimentation erfolgen. Die Extraktion wird mit frischer, also keine oder nahezu keine Bitterstoffe enthaltender Würze als Extraktionsmittel erneut durchgeführt. Dieser Vorgang wird solange wiederholt, bis das Hopfenprodukt genügend ausgelaugt ist, also bis es keinen oder nur noch einen geringen Anteil an isomerisierten Bitterstoffen enthält, Die aus dem Hopfenprodukt entfernten Bitterstoffe werden der Würze zugeführt.

Darüber hinaus kann auch eine kontinuierliche Fahrweise durchgeführt werden. Hierbei wird beispielsweise ein Teil des Extraktionsmittels mit dem Hopfenprodukt vermischt sowie - unter Ausbildung einer aus den Feststoffen des Hopfenproduktes bestehenden Filterschicht - durch einen Filter geführt und mit frischer Würze als Extraktionsmittel gespült, wodurch es zu besagter Extraktion der Bitterstoffe kommt. Insbesondere ist es hier möglich, nicht nur einen Teil der, sondern die gesamte Würze als Extraktionsmittel durch das vorisomerisierte Hopfenprodukt zu führen, wodurch die Extraktion auf ein Maximum gesteigert werden kann. Hierzu ist der Extraktionsbehälter beispielsweise zwischen dem Läuterbottich und der Würzepfanne oder zwischen dem Heißtrubabscheidebehälter und dem Kühler angeordnet. Die Würze wird somit ganz oder teilweise durch das isomerisierte Hopfenprodukt zwangsgeführt, wodurch sie beim Durchfließen der Filterschicht die Bitterstoffe extrahiert. Insbesondere kann hier das Hopfenprodukt auch in den Läuterbottich, unterhalb des Senkbodens vorgelegt werden. Hierzu muss oberhalb der Anstiche zum Abziehen der Würze noch eine Filterstützschicht eingebaut sein, auf welcher sich das isomerisierte Hopfenprodukt zur Ausbildung der eigentlichen Filterschicht aufbaut.

Alternativ zu der eben beschriebenen kontinuierlichen Fahrweise können auch in Reihe geschaltete Extrakteure nacheinander vom Extraktionsmittel (Würze) durchströmt werden. Hierzu können Hopfenprodukte in mehreren Extraktionsbehältern vorgelegt werden. Somit Ist es insbesondere auch möglich, den Hopfenproduktrest eines vorangegangenen Brauprozesses (Sudes) noch weiter auszulaugen. Dieser wird hierzu aufgrund des geringeren Bitterstoffanteils im ersten Behälter, den das Extraktionsmittel durchströmt, vorgelegt. Der oder die darauffolgenden Behälter sind entweder ebenfalls mit - einen höheren Bitterstoffanteil enthaltenden - Hopfenproduktresten aus anderen Brauprozessen und dann mit dem Hopfenprodukt des aktuellen Brauprozesses (mehrere Extrakteure) oder direkt mit diesem (zwei Extrakteure) befüllt. Ist ein Brauprozess beendet, wird der erste Behälter von dem nun vollkommen ausgelaugten Hopfenprodukt entleert, mit dem neuen Hopfenprodukt des folgenden Brauprozesses befüllt und an die letzte Stelle in der Behälterreihe angeordnet. Behälter zwei eines vorangegangenen Brauprozesses "rutscht" für den folgenden Brauprozess folglich an erste Stelle und wird im Anschluss an diesen Brauprozess entleert und für den nächsten Brauprozess mit neuem Hopfenprodukt befüllt, wobei er wiederum an die letzte Stelle in der Behälterreihe angeordnet wird usw. Dadurch, dass sich das weitestgehend ausgelaugte Hopfenprodukt somit stets im ersten Behälter befindet, ist gewährleistet, dass die Würze als Extraktionsmittel die Hopfenprodukte immer in der Reihenfolge aufsteigender Bitterstoffkonzentrationen durchströmt und somit immer ein für einen Extraktionsprozess nötiges Konzentrationsgefälle besteht. Durch dieses Vorgehen ist es gerade bei vielen aufeinanderfolgenden Suden möglich, die maximale Bitterstoffkonzentration pro Sudtag in die Würzen einzubringen.

Des Weiteren können auch Extraktionsanlagen mit Förderband und mehreren Extraktionskammem zum Einsatz kommen. Hierbei durchströmt die Extraktionsmittelphase das aufgeschüttete Extraktionsgut und wird nach dem Durchlauf durch das Feststoffbett unten aufgefangen sowie mittels einer Förderpumpe der nächsten Sektion angeboten und dort beispielsweise versprüht. Die Dicke der Extraktionsschicht auf dem Band kann hierbei eingestellt werden. Darüber hinaus können auch Neuentwicklungen, wie beispielsweise der Karusselextraktor o. ä. zum Einsatz kommen.

In der Erfindung ist der Extraktionsbehälter als Schneckenextraktor aufgebaut. In dem Behälter befindet sich hierbei einer Förderschnecke, mit welcher das Hopfenprodukt während der Extraktion auch bei einer kontinuierlichen Prozessführung locker gehalten werden kann. Insbesondere kann hierdurch zumindest teilweise auch eine Gegenstromführung von Würze und Hopfenprodukt realisiert werden, wodurch sich die Effizienz bei der Extraktion weiter steigern lässt.

Bei Verwendung von Hopfenextrakten ist es zur Erzielung einer für effiziente Extraktionsvorgänge benötigten großen Oberfläche vorteilhaft, den Extrakt in der Würze gezielt zu emulgieren, Hierzu weist die Vorrichtung Apparaturen zur Emulgierung auf, mit welchen der vorisomerisierte Extrakt gezielt im Sinne einer Öl In Wasser Emulsion in kleinen "Kügelchen" in die frische Würze eingebracht werden kann. Solche Apparaturen sind in der Verfahrenstechnik bekannt und können der einschlägigen Fachliteratur entnommen werden. Insbesondere bietet sich hier auch ein Versprühen des Extraktes, beispielsweise mittels Düsen, in frische Würze an, wodurch die Effizienz der Extraktion stark gesteigert werden kann. Gegebenenfalls wird der vorisomerisierte Hopfenextrakt vor einer Emulgierung bereits in einem Fluid vorgelöst und erhitzt, um die Viskosität zu erniedrigen und eine spätere Emulgierung somit zu forcieren und/oder zu vereinfachen. Vorteilhafterweise wird hierbei der Hopfenextrakt gezielt in eine Würze, welche gerade - beispielsweise in Rohrleitungen - gefördert wird, emulgiert. In einer vorteilhaften Ausführung der Erfindung erfolgt diese Emulgierung zur Extraktion direkt in die würzeführende Leitung zwischen dem Läuterbottich und der Würzepfanne oder zwischen dem Heißtrubabscheider und dem Kühler. Bei ausreichender Emulgierung kann hierdurch erreicht werden, dass alle isomerisierten Bitterstoffe bereits in der Leitung aus der restlichen Extraktmatrix extrahiert werden und somit bereits in der Würzeleitung vollständig In der in der Würze gelöst vorliegen, da durch die Emulgierung in stets frischer Würze das zur effizienten Extraktion benötigte Konzentrationsgefälle hier stets maximal ist.

Aufgrund der möglicherweise begrenzten, für den Extraktionsprozess zur Verfügung stehenden Zeit werden in einer vorteilhaften Ausführung darüber hinaus Apparaturen eingesetzt, mit welchen eine Extraktion beschleunigt und somit die Extraktionsdauer abgesenkt bzw. die Ausbeute des Extraktionsprozesses erhöht werden kann. Diese Apparaturen arbeiten beispielsweise mit Vibrationen oder einer Ultrabeschallung.

Zur Verbesserung des Extraktionsprozesses bzw. zu dessen Beschleunigung wird das Hopfenprodukt in einer vorteilhaften Ausführung der Erfindung vor dessen Zugabe zum Extraktionsmittel noch weiter zerkleinert. Dies kann beispielsweise in vorgeschalteten Mahlwerken oder Mühlen geschehen. Durch diese Zerkleinerung kann die Weglänge, die das Extraktionsmittel Im Hopfenprodukt zurücklegen muss, weiter verringert werden, wodurch sich eine gesteigerte Extraktionsrate ergibt.

Darüber hinaus kann das Hopfenprodukt im Anschluss an den Extraktionsprozess ausgepresst und somit zumindest größtenteils entfluidisiert werden. Hierdurch können Bitterstoffe - bei Verwendung von Würze aber auch Extrakt - gewonnen und in die restliche Würze überführt werden, welche sonst im Hopfenprodukt zurückgeblieben und somit verloren wären. Die Ausbeute kann somit erhöht werden.

Da aber auch in vorisomerisierten Hopfenprodukten teilweise Stoffe enthalten sind, die für das resultierende Bier - zumindest in großen Mengen bzw. hohen Konzentrationen - unerwünscht sind und da auch diese Stoffe bei der erfindungsgemäßen gezielten Extraktion vermehrt in das resultierende Bier eingebracht würden, wird das vorisomerisierte Hopfenprodukt in einer äußerst vorteilhaften Ausführung der Erfindung vorab mit einem Fluid - und hier insbesondere ebenfalls mit Würze - versetzt und die Mischung zum Sieden gebracht, wodurch die in der Regel flüchtigen unerwünschten Hopfeninhaltsstoffe, wie Aromastoffe und Öle, aus der Mischung ausgedampft werden und sich der gleiche Effekt wie bei einer Austreibung während der herkömmlichen Würzekochung bei herkömmlicher Hopfengabe ergibt. Somit weisen auch die resultierenden Biere die gleichen geschmacklichen und geruchlichen Eigenschaften auf. Darüber hinaus können solche Stoffe aufgrund ihrer thermodynamischen Eigenschaften in Wasser auch durch eine gezielte Wasserdampfdestillation, aber auch durch eine Desorption mit Gasen oder Dämpfen, entfernt werden. Einige dieser Stoffe können jedoch in geringeren Konzentrationen im Bier auch erwünscht sein, da durch diese beispielsweise eine Hopfenblume erzeugt werden kann. Somit kann der hierbei entweichende Dampf in einer vorteilhaften Ausführung auch gezielt kondensiert werden. Das Kondensat kann somit gegebenenfalls nach einer Fraktionierung wieder zumindest teilweise der Würze, gegebenenfalls nach einer weiteren Aufbereitung durch Phasentrennung und/oder eine Rektifikation, zugesetzt werden.

In einigen Fällen - und hier gerade bei einer gezielten Extraktion nach einer Temperaturbehandlung der Würze - kann es von Vorteil sein, nur einen Teil der verwendeten isomerisierten Hopfenprodukte über die Extraktionsvorrichtung in die Würze einzubringen, während der restliche Teil wie herkömmlich in der Würze-pfanne zugegeben wird. Einige Inhaltsstoffe des Hopfens können nämlich die Koagulation von Eiweißen fördern. Somit kann die Zugabe einer Teilmenge des Hopfenprodukts in die Würzepfanne die dort benötigte Eiweißausscheidung forcieren.

Die auf eine Vorrichtung gerichtete Aufgabe wird erfindungsgemäß für eine Vorrichtung zur Bierbereitung gemäß Anspruch 8 mit einem Behälter zur Maischebereitung, mit einer Vorrichtung zur Temperaturbehandlung der Würze, mit einem Heißtrubabscheider und mit einem Gärbehälter und einem Extraktionsbehälter, umfassend eine Einbringstelle für ein Hopfenprodukt und einen Fluideinlass für Würze als Extraktionsmittel vorgesehen ist, wobei der Extraktionsbehälter weiter einen Fluidauslass aufweist, der an eine Würze führende Stelle angeschlossen ist dadurch gelöst, dass der Extraktionsbehälter (15) als Schneckenextraktor aufgebaut ist, welcher zumindest teilweise auch eine Gegenstromführung von Würze und Hopfenprodukt ermöglicht.

Unter Würze führender Stelle wird hierbei ein anderer Teil der Vorrichtung verstanden, durch welchen auch bei herkömmlicher Bierbereitung Würze geführt werden würde.

Für die Vorrichtung ist es dabei nicht nötig, dass die angegebenen Prozesse alle in verschiedenen Behältern ablaufen. Es soll von der erfindungsgemäßen Vorrichtung genauso umfasst sein, dass die Maischebereitung, die Temperatur-behandlung, die Heißtrubabscheidung und/oder die Gärung auch in einem einzigen Behälter oder jeweils einzelne dieser Prozesse in einem gemeinsamen Behälter zusammengefasst sein können. So wird insbesondere eine Ausgestaltung umfasst, gemäß der die Maischebereitung und die Temperaturbehandlung in einer

Pfanne, oder die Temperaturbehandlung und die Heißtrubabscheidung in einer Pfanne durchgeführt werden.

Der angegebene Extraktionsbehälter kann sich grundsätzlich außerhalb der vorhandenen Brauereianlagen befinden. Darüber hinaus kann er beispielsweise auch im Inneren einer bestehenden Würzepfanne oder innerhalb eines Läuterbottichs unterhalb des Senkbodens eingebaut sein. Des Weiteren können auch mehrere separate Extraktionsbehälter an einer Brauanlage angeordnet sein.

Die für das Verfahren zur Bierbereitung genannten Vorteile können hierbei sinngemäß auf die Vorrichtung übertragen werden. Weitere vorteilhafte Ausführungen der Vorrichtung können den hierzu formulierten Unteransprüchen entnommen werden.

In einer vorteilhaften Ausführung weist die Vorrichtung eine Steuer-, Mess-, und/oder Regeleinehit auf, mit welcher die Zuführung des vorisomerisierten Hopfenproduktes sowie gegebenenfalls des Fluides zur Verdampfung, die Verdampfungsleistung, der Volumenstrom der Würze bei der Extraktion, die Bewegung des Hopfenproduktes während der Extraktion, die Temperatur bei der Extraktion, die Konzentration an isomerisierten Bitterstoffen in der Würze sowie die Rückführung der Würze zur restlichen Würze gesteuert, gemessen und oder geregelt werden kann.

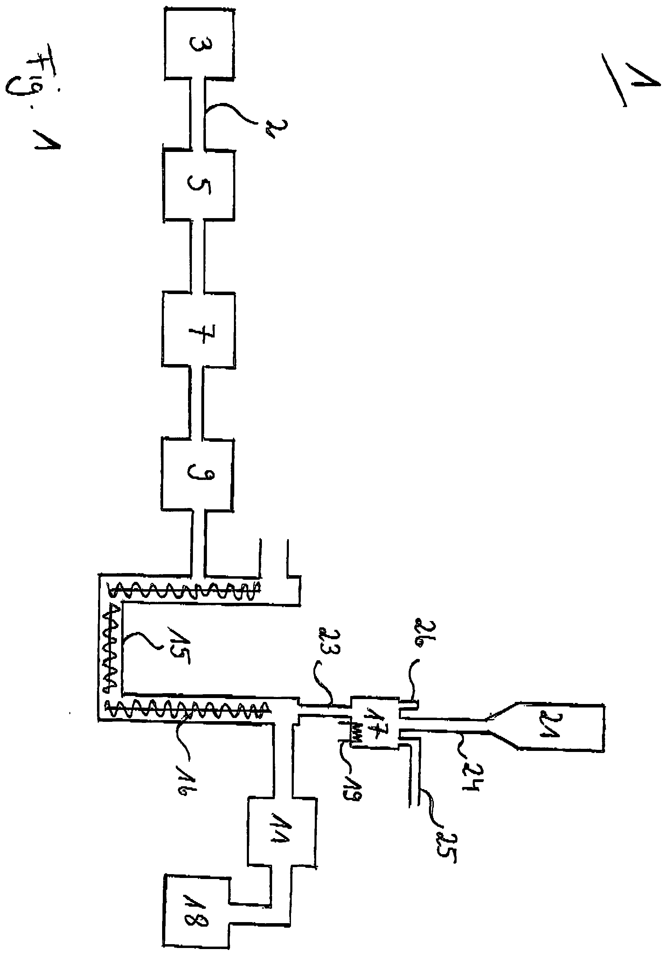

Ein Ausführungsbeispiels der Erfindung wird anhand einer Zeichnung näher erläutert. Dabei zeigt Fig. 1 schematisch eine Vorrichtung zur Bierbereitung.

In Fig. 1 ist schematisch eine Vorrichtung 1 zur Bierbereitung dargestellt. Die Vorrichtung 1 umfasst hierbei einen Maischebottich 3, der der Zubereitung von Maische, insbesondere unter der Verwendung von Malz dient. An den Maischebottich 3 ist ein so genannter Läuterbottich 5 angeschlossen, in welchem eine Fest-Flüssig-Trennung der Maische durchgeführt wird. Insbesondere werden dabei Spelzen und andere feste Malzbestandteile abfiltriert. Die aus dem Läuterbottich 5 gewonnene Würze fließt anschließend in eine Vorrichtung zur Temperaturbehandlung 7 der Würze, In welcher die Temperaturbehandlung der Würze zur Erzielung kinetischer Reaktionen und einer gewissen Verdampfung zum Einstellen einer gewünschten Stammwürze durchgeführt wird. Bei üblichen Brauvorgängen entspricht die Vorrichtung zur Temperaturbehandlung 7 der Würze einer Würzepfanne und man spricht hierbei auch von der "Würzekochung". Die Würze kann aber auch einer Rektifizierung unterzogen oder in einer sonstigen Art und Weise temperaturbehandelt werden. Der Würzepfanne 7 ist ein Heißtrubabscheider 9 nachgeschaltet, in welchem die während der Temperaturbehandlung der Würze gebildeten Eiweiße und sonstigen Feststoffe abgeschieden werden. Geschieht dies durch eine Zirkulation, so spricht man auch von einem "Whirlpool". Die aus dem Heißtrubabscheider 9 gewonnene Würze gelangt schließlich in einen Kühler 11, in dem die Würze auf eine gewünschte Temperatur abgekühlt wird. Der Kühler ist mit dem Gärbehälter 18 verbunden. Die Verbindung der einzelnen Gefäße erfolgt über die Würzeleitung 2.

Im Unterschied zu einer herkömmlichen Vorrichtung zur Bierbereitung befindet sich zwischen dem Heißtrubabscheider 9 und dem Kühler 11 ein Extraktionsbehälter 15, welche in diesem Fall als sogenannter Schneckenextraktor, der im Inneren eine Förderschnecke 16 aufweist, ausgebildet ist. Auch dieser Extraktionsbehälter ist über die Würzeleitung 2 mit dem Heißtrubabscheider 9 sowie dem Kühler 11 verbunden, Der Schneckenextraktor weist eine Einbringstelle für ein vorisomerisiertes Hopfenprodukt auf, welche über eine Leitung 23 mit einer Verdampfungsapparatur 17 verbunden ist, die ein Heizelement 19 sowie einen nicht näher dargestellten Rührer aufweist. Die Verdampfungsapparatur 17, welche über einen Dampfauslass 26 sowie eine Leitung 25 zur Einbringung eines Fluides - hier Wasser - verfügt, ist darüber hinaus noch über eine Leitung 24 mit einem Hopfenvorratsbehälter 21 verbunden, in welchem ein vorisomerisiertes Hopfenprodukt gelagert oder vorgelegt werden kann. Die einzelnen Komponenten der Vorrichtung 1 können über nicht näher dargestellte Ventile, welche in die jeweiligen Leitungen integriert sind, voneinander abgetrennt werden. Darüber hinaus weist die Vorrichtung 1 noch eine nicht näher dargestellte Steuer- und Regeleinheit auf, mit weleher die jeweiligen Massenströme der Würze, die Rotationsgeschwindigkeit der Förderschnecke 16 im Schneckenextraktor 15, die Verdampfungsleistung, der Austrag des extrahierten Hopfenproduktrestes sowie Ventile und Pumpen gesteuert und/oder geregelt werden können.

Bei Verwendung der Vorrichtung 1 erfolgt die Bierbereitung anfangs auf herkömmliche Weise. Das vorisomerisierte Hopfenprodukt, in diesem Fall Hopfenpellets, wird im Gegensatz zu herkömmlichen Brauprozessen jedoch nicht der Würzepfanne 7 zugegeben, sondern aus dem Vorratsbehälter 21 über die Leitung 24 der Verdampfungsapparatur 17 zugeführt, welche über die Leitung 25 mit Wasser befüllt wird. Daraufhin wird mittels der nicht näher dargestellten Steuer- und Regeleinheit das Heizelement 19 angeschaltet, wodurch die Mischung aus Wasser und dem vorisomerisierten Hopfenprodukt bis zum Siedepunkt erhitzt wird. Zur Homogenisierung und zur Vermeidung von Anbrennungen der Feststoffe wird hierbei der nicht näher dargestellte Rührer betrieben. Die Mischung wird dann auf ca. 95 % ihrer Ausgangsmasse eingedampft, wodurch es zu einem effektiven Austreiben unerwünschter Hopfenaromastoffe über den Dampfauslass 26 kommt. In der Zwischenzeit ist der Brauprozess soweit fortgeschritten, dass nach vollzogener Würzekochung in der Würzepfanne 7 - bei welcher es aufgrund der hohen Temperaturen auch ohne eine Zugabe von Hopfen zu einer ausreichenden Trubbildung kommt - der Heißtrub im Heißtrubabschelder 9 abgeschieden wird. Hierauf wird die Mischung aus dem vorisomerisierten Hopfenprodukt und Wasser über die Leitung 23 in den Schneckenextraktor 15 gegeben, welcher im Anschluss daran mit der vom Heißtrub befreiten Würze über die Würzeleitung 2 durchströmt wird. Während dieses Vorgangs kommt es zu einer effektiven kontinuierlichen Extraktion der vorisomerisierten Bitterstoffe, welche aufgrund ihrer Isomerisierung und der damit einhergehenden höheren Polarität im Vergleich zu unisomerisierten Bitterstoffen bis hin zum fertigen Bier in der Würze gelöst bleiben können. Um das Hopfenprodukt für eine effiziente Extraktion stets aufgelockert zu halten und es zumindest teilweise im Gegenstrom zur zum Kühler 11 fließenden Würze zu führen, wird während dieses Vorgangs die Förderschnecke 16 des Schneckenextraktors 15 gedreht bzw. mittels der nicht näher dargestellten Steuer- und Regeleinrichtung betrieben. Somit wird die vom Heißtrub befreite Würze zur Extraktion von Bitterstoffen durch den Extraktionsbehälter 15 geführt bevor sie zum Kühler gelangt und zur Gärung in herkömmlicher Weise dem Gärbehälter 18 zugeführt wird. Durch diese Fahrweise wird somit vermieden, dass es zu einer Rückvermischung mit noch nicht zu Extraktionszwecken verwendeter Würze kommt, wodurch das Bitterstoffkonzentrationsgefälle zwischen Würze und Hopfenprodukt stets maximal gehalten und die Extraktion bzw. die Einbringung der vorisomerisierten Hopfenbitterstoffe in die Würze somit optimiert wird. Ist die Würze vollends aus dem Heißtrubabscheider 9 abgeführt und fließt keine Würze mehr durch den Extraktionsbehälter 15, dient die Förderschnecke 16 dazu, das extrahierte Hopfenprodukt aus der Extraktionsbehälter 15 abzuführen, bzw. diese zu entleeren.

In einer alternativen ausführungsform der Vorrichtung 1 ist der Extraktionsbehälter 15 zwischen dem Läuterbottich 5 und der Würzepfanne 7 angeordnet, sodass hier eine gezielte Extraktion bereits mit Läuterwürze vor einer Temperaturbehandlung erfolgt. Die oben angeführten Verfahrensschritte können hierbei sinngemäß übertragen werden, wobei hier auf eine separate Verdampfung und somit auf eine Verdampfungsapparatur 17 verzichtet werden kann, da ein Ausdampfen unerwünschter Hopfenaromastoffe in der nachgeschalteten Temperaturbehandlung der Würze ohnehin erfolgt.

Durch diese Fahrweisen kann mittels der Vorrichtung 1 die Ausbeute an vorisomerisierten Bitterstoffen um deutlich über 25 % gesteigert werden, wodurch die zu verwendende Menge an isomerisierten Hopfenprodukten drastisch gesenkt werden kann. Somit können massiv Rohstoffe sowie Geld gespart werden, was jeder Brauerei, die mit solchen Hopfenprodukten braut, große Vorteile bringt.

### Bezugszeichenliste

- 1: Vorrichtung
- 2: Würzeleitung
- 3: Maischebehälter
- 5: Läuterbottich
- 7: Vorrichtung zur Temperaturbehandlung (Würzepfanne)
- 9: Heißtrubabscheider (Whirlpool)
- 11: Kühler
- 15: Extraktionsbehälter (Schneckenextraktor)
- 17: Verdampfungsapparatur
- 18: Gärbehälter
- 19: Heizelement
- 21: Vorratsbehälter
- 23: Leitung
- 24: Leitung
- 25: Leitung
- 26: Dampfauslass

Es folgt ein Blatt Zeichnungen!

## Patentansprüche

1. Verfahren zur Bierbereitung, wobei aus einer Maische eine Würze gewonnen, die Würze anschließend einer Temperaturbehandlung unterzogen, aus der behandelten Würze der Heißtrub abgeschieden, und nach der Heißtrubabscheidung aus der Würze durch eine Gärung Bier gewonnen wird,
**dadurch gekennzeichnet,**
**dass** während des Brauprozesses ein insbesondere vorisomerisiertes Hopfenprodukt nicht auf einmal der gesamten Würze zugegeben wird, sondern die Bitterstoffe aus dem Hopfenprodukt mittels Würze als Extraktionsmittel in einem Extraktionsbehälter (15), der als Schneckenexraktor aufgebaut ist, gezielt extrahiert und hierdurch in die Würze überführt werden, wobei zumindest teilweise auch eine Gegenstromführung von Würze und Hopfenprodukt realisiert wird.

2. Verfahren nach Anspruch 1,
**dadurch gekennzeichnet,**
**dass** die Bitterstoffe nach einer Heißtrubabscheidung der Würze - und hier auch nach der Hauptgärung der Würze - gezielt extrahiert werden.

3. Verfahren nach Anspruch 1,
**dadurch gekennzeichnet,**
**dass** die Bitterstoffe während des Läuterprozesses gezielt extrahiert werden.

4. Verfahren nach einem der Ansprüche 1-3,
**dadurch gekennzeichnet,**
**dass** die Extraktion in Form eines Verdrängungsverfahrens durchgeführt wird.

5. Verfahren nach einem der Ansprüche 1-3,
**dadurch gekennzeichnet,**
**dass** ein Hopfenextrakt verwendet wird und dieser gezielt in frischer Würze zur Extraktion der Bitterstoffe emulgiert wird.

6. Verfahren nach einem der vorhergehenden Ansprüche,
**dadurch gekennzeichnet,**
**dass** unerwünschte Stoffe des Hopfenproduktes vor und/oder während der Extraktion, insbesondere durch Verdampfen, entfernt werden.

7. Vorrichtung zur Bierbereitung, mit einem Behälter zur Maischebereitung (3), mit einer Vorrichtung zur Temperaturbehandlung der Würze (7), mit einem Heißtrubabscheider (9) und mit einem Gärbehälter (18), und einem
Extraktionsbehälter (15), umfassend eine Einbringstelle für ein Hopfenprodukt und einen Fluideinlass für Würze als Extraktionsmittel vorgesehen ist, wobei der Extraktionsbehälter (15) weiter einen Fluidauslass aufweist, der an eine Würze führende Stelle angeschlossen ist, **dadurch gekennzeichnet, dass** der Extraktionsbehälter (15) als Schneckenextraktor aufgebaut ist, welcher zumindest teilweise auch eine Gegenstromführung von Würze und Hopfenprodukt ermöglicht.

8. Vorrichtung nach Anspruch 7,
**dadurch gekennzeichnet,**
**dass** der Extraktionsbehälter (15) nach dem Heißtrubabscheider (9) - und hier auch nach dem Gärbehälter (18) - angeordnet ist.

9. Vorrichtung nach einem der Ansprüche 7 oder 8,
**dadurch gekennzeichnet,**
**dass** der Extraktionsbehälter (15) derart eingerichtet ist, dass er nach dem Verdrängungsverfahren arbeitet.

10. Vorrichtung nach einem der Ansprüche 7 bis 9,
**dadurch gekennzeichnet,**
**dass** sie eine Apparatur zur Emulgierung von Hopfenextrakten, hier insbesondere Düsen, aufweist.

11. Vorrichtung nach einem der Ansprüche 7 bis 10,
**dadurch gekennzeichnet,**
**dass** eine Apparatur zur Beschleunigung der Extraktion, hier insbesondere eine Ultraschallgenerator, angebracht ist.

12. Vorrichtung nach einem der Ansprüche 7 bis 11,
**dadurch gekennzeichnet,**
**dass** sie eine Regel-, Mess- und/oder Steuereinheit aufweist, mit welcher die Zuführung des vorisomerisierten Hopfenproduktes sowie gegebenenfalls des Fluides zur Verdampfung, die Verdampfungsleistung, der Volumenstrom der Würze bei der Extraktion, die Bewegung des Hopfenproduktes während der Extraktion, die Temperatur bei der Extraktion, die Konzentration an isomerisierten Bitterstoffen in der Würze sowie die Zuführung der Würze zur restlichen Würze gesteuert, gemessen und/oder geregelt werden kann.

## Claims

1. A process for preparing beer, wherein a wort is obtained from a mash, the wort is thereupon subjected to a heat treating, the hot trub is separated from the treated wort, and after the hot-trub separation, beer is obtained from the wort by fermentation,
**characterized in that**
during the brewing process, an in particular pre-isomerized hop product is added to the entire wort not all at once, but the bitter substances from the hop product are specifically extracted by means of wort as an extracting agent in an extraction container (15), which is constructed as a screw-type extractor, and are thereby transferred into the wort, whereby also a counterflow feeding of wort and hop product is realized at least partially.

2. The method according to claim 1,
**characterized in that**
after a hot-trub separation of the wort - and here also after the main fermentation of the wort - the bitter substances are specifically extracted.

3. The method according to claim 1,
**characterized in that**
the bitter substances are specifically extracted during the lautering process.

4. The method according to any of claims 1-3,
**characterized in that**
the extraction is carried out in the form of a displacement method.

5. The method according to any of claims 1-3,
**characterized in that**
a hop extract is employed and this is specifically emulsified in fresh wort for extracting the bitter substances.

6. The method according to any of the preceding claims,
**characterized in that**
unwanted substances of the hop product are removed before and/or during the extraction, in particular by evaporation.

7. A device for preparing beer, having a container for preparing mash (3), having a device for heat treating the wort (7), having a hot-trub separator (9) and having a fermenting container (18), and an
extraction container (15) comprising an introduction point for a hop product and a fluid inlet for wort as an extracting agent is provided, wherein the extraction container (15) further comprises a fluid outlet which is connected to a place carrying wort, **characterized in that** the extraction container (15) is constructed as a screw-type extractor which also enables an at least partial counterflow feeding of wort and hop product.

8. The device according to claim 7,
**characterized in that**
the extraction container (15) is arranged downstream of the hot-trub separator (9) - and here also downstream of the fermenting container (18).

9. The device according to any of claims 7 or 8,
**characterized in that**
the extraction container (15) is devised such that it operates according to the displacement method.

10. The device according to any of claims 7 to 9,
**characterized in that**
it comprises an apparatus for emulsifying hop extracts, here in particular nozzles.

11. The device according to any of claims 7 to 10,
**characterized in that**
an apparatus for accelerating the extraction is attached, here in particular an ultrasonic generator.

12. The device according to any of claims 7 to 11,
**characterized in that**
it has a regulating, measuring and/or controlling unit by which there can be controlled, measured and/or regulated the feeding of the pre-isomerized hop product and, where applicable, of the fluid for evaporation, the evaporation rate, the volume flow of the wort during extraction, the movement of the hop product during extraction, the temperature during extraction, the concentration of isomerized bitter substances in the wort and the feeding of the wort to the remaining wort.

## Revendications

1. Procédé de préparation de bière, moyennant quoi, à partir d'une pâte, est trait un moût, le moût est ensuite soumis à un traitement thermique, le dépôt à chaud est séparé du moût traité et, après la séparation du dépôt à chaud du moût, la bière est produite par fermentation,
**caractérisé en ce que**
pendant le processus de brassage, un produit à base de houblon, plus particulièrement pré-isomérisé, n'est pas ajouté en une seule fois à tout le moût, mais les substances amères sont extraites de manière ciblée du produit à base de houblon à l'aide du moût en tant qu'agent d'extraction dans un récipient d'extraction (15), qui est conçu comme un extracteur à vis sans fin et sont ainsi transférées dans le moût, moyennant quoi un guidage à contre-courant du moût et du produit à base de houblon est réalisé au moins partiellement.

2. Procédé selon la revendication 1,
**caractérisé en ce que**
les substances amères sont extraites de manière ciblée après une séparation du dépôt à chaud du moût et ici également après la fermentation principale du moût.

3. Procédé selon la revendication 1,
**caractérisé en ce que**
les substances amères sont extraites de manière ciblée pendant le processus de filtrage.

4. Procédé selon l'une des revendications 1 à 3,
**caractérisé en ce que**
l'extraction est effectuée sous la forme d'un procédé de refoulement.

5. Procédé selon l'une des revendications 1 à 3,
**caractérisé en ce que**
un extrait de houblon est utilisé et celui-ci est émulsionné de manière ciblée dans du moût frais pour l'extraction des substances amères.

6. Procédé selon l'une des revendications précédentes,
**caractérisé en ce que**
les substances indésirables du produit à base de houblon sont éliminées avant et/ou pendant l'extraction, plus particulièrement par évaporation.

7. Dispositif de préparation de bière, avec un récipient pour la préparation de la pâte (3), avec un dispositif de traitement thermique du moût (7), avec un séparateur de dépôt à chaud (9) et avec un récipient de fermentation (18) et un récipient d'extraction (15) comprenant un point d'introduction pour un produit à base de houblon et une entrée de fluide étant prévue pour le moût en tant qu'agent d'extraction, le récipient d'extraction (15) comprenant en outre une sortie de fluide, qui est raccordée à un point conduisant le moût, **caractérisé en ce que** le récipient d'extraction (15) est conçu comme un extracteur à vis sans fin qui permet au moins partiellement également un guidage à contre-courant du moût et du produit à base de houblon.

8. Dispositif selon la revendication 7,
**caractérisé en ce que**
le récipient d'extraction (15) est disposé après le séparateur de dépôt à chaud (9) et ici également après le récipient de fermentation (18).

9. Dispositif selon l'une des revendications 7 ou 8,
**caractérisé en ce que**
le récipient d'extraction (15) est conçu de façon à ce qu'il fonctionne selon le procédé de refoulement.

10. Dispositif selon l'une des revendications 7 à 9,
**caractérisé en ce que**
il comprend un appareil pour l'émulsification d'extraits de houblon, ici plus particulièrement des buses.

11. Dispositif selon l'une des revendications 7 à 10,
**caractérisé en ce que**
un appareil pour l'accélération de l'extraction, ici plus particulièrement un générateur d'ultrasons.

12. Dispositif selon l'une des revendications 7 à 11,
**caractérisé en ce que**
il comprend une unité de régulation, de mesure et/ou de commande, avec laquelle l'introduction du produit à base de houblon pré-isomérisé, ainsi que, le cas échéant, du fluide pour l'évaporation, la puissance d'évaporation, le débit volumique du moût lors de l'extraction, le mouvement du produit à base de houblon pendant l'extraction, la température lors de l'extraction, la concentration en substances amères isomérisées dans le moût ainsi que l'introduction du moût dans le reste du moût, peuvent être contrôlés, mesurés et/ou régulés.
